(19) Europäisches Patentamt
European Patent Office
Office européen des brevets

(11) Veröffentlichungsnummer: **0 493 749 A2**

# (12) EUROPÄISCHE PATENTANMELDUNG

(21) Anmeldenummer: **91121773.5**

(51) Int. Cl.5: **C08G 73/12**

(22) Anmeldetag: **19.12.91**

(30) Priorität: **03.01.91 DE 4100038**

(43) Veröffentlichungstag der Anmeldung: **08.07.92 Patentblatt 92/28**

(84) Benannte Vertragsstaaten: **AT CH DE FR GB IT LI SE**

(71) Anmelder: **BASF Aktiengesellschaft**
**Carl-Bosch-Strasse 38**
**W-6700 Ludwigshafen(DE)**

(72) Erfinder: **Wahle, Michael, Dr.**
**Cuiserystrasse 7 a**
**W-6706 Wachenheim(DE)**
Erfinder: **Peter, Roland, Dr.**
**Pfalzring 92**
**W-6704 Mutterstadt(DE)**

## (54) Bismaleinimidharze.

(57) Die Erfindung betrifft feste, schmelzbare Bismaleinimidharze aus einem Gemisch aus

A einem speziellen, vorzugsweise aliphatischen oder einkernig aromatischen Bismaleinimid, gegebenenfalls zusammen mit einem zweikernig aromatischen Bismaleinimid und

B einem Aminophenol.

EP 0 493 749 A2

Die Erfindung betrifft feste, schmelzbare Bismaleinimidharze aus einem oder mehreren Bismaleinimid-(en) und einer Aminophenolverbindung, die teilweise zu einem Präpolymeren vorreagiert wurden.

Bismaleinimidharze aus Bismaleinimiden und Aminophenolen sind bekannt. Sie eignen sich zur Herstellung von Lacken und Überzügen sowie von Formteilen durch Vermischen mit Verstärkungsfasern, Verpressen und Aushärten.

Nach JP-A 56 014 530 und DE-A 27 28 843 werden Bismaleinimid und Aminophenol unter Bildung eines Additionsproduktes (Präpolymeren) bei 100 ° C bis 130 ° C miteinander vermischt. Bei 100 ° C findet selbst nach über 1 Stunde Reaktionszeit keine nennenswerte Bildung von Präpolymeren statt, da die Temperatur unterhalb der Schmelztemperatur der beiden Ausgangsstoffe liegt. Bei 130 ° C ist die Reaktion schon so weit fortgeschritten, daß die Schmelzviskosität stark angestiegen ist und kurz vor dem Gelpunkt steht, was eine gefahrlose Herstellung des Harzes im technischen Maßstab ausschließt.

In EP-A 237 763 ist ein Verfahren zur Herstellung von Prepregs beschrieben, bei dem zunächst ein Gemisch aus einem Bismaleinimid und einem Aminophenol erhitzt wird und das Reaktionsprodukt dann als Schmelze auf Verstärkungsfasern aufgebracht wird. Im Beispiel wird die Umsetzung bei 180 ° C vorgenommen. Dabei schreitet die Reaktion so weit vor, daß - insbesondere bei dichten Fasergebilden, wie z.B. Geweben - die Benetzung der Fasern Schwierigkeiten macht, so daß die damit hergestellten Verbundteile Fehlstellen aufweisen.

Die deutsche Patentanmeldung P 39 24 867.4 betrifft ein lagerfähiges Bismaleinimidharz in fester Form, dessen Härtungsprodukte im Vergleich zu dem erwähnten Stand der Technik verbesserte mechanische Eigenschaften und eine höhere thermooxidative Beständigkeit aufweisen. Dieses Harz ist eine Mischung aus einem speziellen zweikernigen Bismaleinimid und Aminophenol, die zu einem Präpolymeren vorreagieren.

Es wurde nun gefunden, daß bei Mischungen von andersartigen, vorzugsweise von einkernigen Bismaleinimiden mit Aminophenol diese vorteilhaften Eigenschaften noch weiter verbessert sind.

Gegenstand der Erfindung ist demzufolge ein festes, schmelzbares Bismaleinimidharz, hergestellt durch Vermischen von

A einem Bismaleinimid der Formel (I)

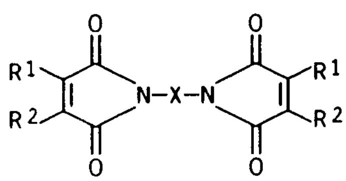

(I)

mit X = $C_2$-$C_{10}$-Alkyl,

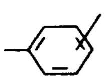 , 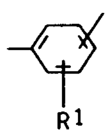 , 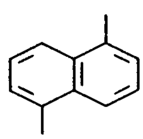

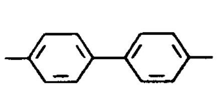 oder 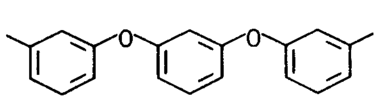 ,

wobei $R^1$, $R^2$ = H, Methyl oder Halogen sind,
gegebenenfalls zusammen mit

A' einem Bismaleinimid der Formel

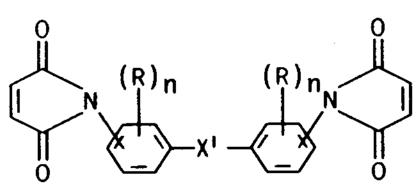

mit
X' = $CH_2$, O oder $SO_2$,
R = $C_1$-$C_4$-Alkyl
n = 0, 1 oder 2,

B einer Aminophenolverbindung der Formel (II)

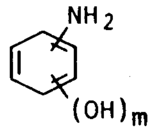

(II)

mit m = 1-3

im Molverhältnis (A+A'):B = 2,8:1 bis 1:1, wobei A+A' und B teilweise zu einem Präpolymeren vorreagieren, sowie gegebenenfalls üblichen Additionskatalysatoren, Polymerisationsinhibitoren, radikalischen Polymerisaionsinitiatoren, copolymerisierbaren Vinyl- oder Allylverbindungen, Epoxidharzen, Gleitmitteln, Verstärkungsfasern und Flammschutzadditiven.

Zu den Einsatzstoffen ist folgendes zu sagen:

A) Bismaleinimide

Bismaleinimide der Formel (I) sind bekannt, z.B.aus DE-A-20 40 094, DE-A-27 19 903 und DE-A-32 47 058. Bevorzugt sind N,N'-m-Phenylen-bismaleinimid, N,N'-p-Phenylen-bismaleinimid, N,N'-4-Methyl-1,3-phenylen-bismaleinimid und N,N'-1,6-Hexamethylen-bismaleinimid sowie Mischungen davon. Neben den Bismaleinimiden sind grundsätzlich auch Tris-, Tetra- oder Polymaleinimide sowie Mischungen der Bismaleinimide mit Mono- und Polymaleinimiden geeignet.

Diese Bismaleinimide A können mit den Bismaleinimiden A' der deutschen Patentanmeldung P 39 24 867.4 abgemischt sein, wobei dann das molare Mischungsverhältnis A:A' vorzugsweise zwischen 95:5 und 10:90, insbesondere zwischen 80:20 und 30:70 liegt.

Bei Zusatz der besonders bevorzugten einkernigen aromatischen Bismaleinimide werden die thermooxidative Beständigkeit sowie die mechanischen Eigenschaften bei erhöhter Temperatur entscheidend verbessert. Zudem wird der E-Modul bei Raumtemperatur deutlich erhöht.

B) Aminophenolverbindung

Geeignete Aminophenolverbindungen sind o-, m- und p-Aminophenol und Mischungen davon, wobei m-Aminophenol bevorzugt ist. Das Molverhältnis (A+A'):B liegt zwischen 2,8:1 und 1,0:1, vorzugsweise zwischen 2,0:1 und 1,5:1.

C) Additionskatalysator

Als Katalysatoren zur Beschleunigung der Additionsreaktion der Aminophenolverbindung an die Doppelbindung des Bismaleinimids können bis zu 2,0 Gew.-%, vorzugsweise 0,1 bis 1,5 Gew.-%, bezogen auf die Summe A+A' +B, eines sekundären oder eines tertiären Amins bzw. Phosphins eingesetzt werden. Bevorzugte Amine sind solche der allgemeinen Formeln $N(R_x)_3$ und $(R_y)_2$-N-$R_2$-N$(R_y)_2$, wobei $R_x$, $R_y$, $R_z$ gegebenenfalls substituierte aliphatische oder aromatische Kohlenwasserstoffreste bzw. eine Kohlenwasserstoffbrücke sein können. Bevorzugte Amine sind N,N,N'N'-Tetramethyl-diaminodiphenylmethan, N,N-Dimethylanilin und Dimethylbenzylamin oder auch Imidazole, wie z.B. 1-Methylimidazol. Bei den Phosphinen ist Triphenylphosphin bevorzugt.

D) Polymerisationsinhibitor

Als Inhibitoren zur Verhinderung der vorzeitigen radikalischen Polymerisation der Doppelbindung des Bismaleinimids werden übliche, vorzugsweise phenolische Verbindungen, insbesondere Hydrochinon oder Toluhydrochinon in Mengen von bis zu 1, vorzugsweise 0,05 bis 0,5 Gew.-%, bezogen auf die Summe A+A' +B, eingesetzt.

Durch geeignete Wahl der Art und Menge der Additionskatalysatoren C und Inhibitoren D kann man die Reaktivität des Gemisches kontrolliert einstellen, so daß die Umsetzung von Bismaleinimid mit Aminophenol

bei höheren Temperaturen genügend rasch erfolgt, ohne daß eine vorzeitige, unerwünschte Vernetzung eintritt und diese auch bei der Kombination mit Verstärkungsfasern und bei der Verarbeitung von Prepregs unterbleibt.

E) Polymerisationsinitiator

Als Polymerisationsinitiatoren zur Beschleunigung des Härtungsvorgangs können 0 bis 2, vorzugsweise 0,02 bis 1,5 Gew.-%, bezogen auf die Summe A + A' + B, üblicher Peroxide, die bei Temperaturen oberhalb von 120 °C in Radikale zerfallen, wie z.B. Dicumylperoxid oder 2,5-Dimethyl-2,5-bis-(t-butylperoxy)-hexin, zugesetzt werden. Weiterhin sind CC-labile Verbindungen und Azoverbindungen geeignet.

F) Vinyl- oder Allylverbindungen

Die Vinyl- oder Allylverbindungen, die in Mengen von bis zu 25, vorzugsweise von 5 bis 20 Gew.-%, bezogen auf die Summe A + A' + B, zugemischt werden, werden bei der Aushärtung des Prepregs als Comonomere in die Harzmatrix einpolymerisiert. Sie wirken als Verdünner zur Erniedrigung der Harzviskosität, vor allem aber kann man durch geeignete Wahl der Art und Menge dieser Zusatzstoffe auch in Form von Gemischen mehrerer Vinyl- oder Allylverbindungen, die Klebrigkeit des Prepregs gezielt einstellen und die Erweichungstemperatur des Tränkharzes auf Raumtemperatur absenken. Bevorzugt sind Monomere, die zwei oder drei Vinyl- oder Allylgruppen aufweisen. Geeignet sind z.B. N-Vinylpyrrolidon, N-Vinylcarbazol, Divinylbenzol, Acrylate, Diallylether, ethoxyliertes Bisphenol-A-methacrylat, 3,3'-Diallyl-Bisphenol A, 3,3'-Dipropenyl-Bisphenol A, ferner Umsetzungsprodukte eines Diepoxids mit Acrylsäure oder Methacrylsäure, insbesondere aber Diallylphthalat oder daraus erzeugte Präpolymere, Triallylcyanurat und Triallylisocyanurat.

G) Epoxidharze

Übliche Epoxidharze in Mengen von bis zu 50, vorzugsweise von 5 bis 30 Gew.-%, bezogen auf A + A' + B, können ebenfalls als reaktive Verdünner wirken, die in die Harzmatrix eingebaut werden. Geeignete Epoxidharze sind z.B. solche auf der Basis von Bisphenol A mit unterschiedlichen Molekulargewichten, Bisphenol F und von Phenol-Formaldehyd-Kondensaten, wobei die Phenylkerne zusätzlich mit Methyl- oder Bromsubstituenten modifiziert sein können. Weiterhin geeignet sind Glycidylester oder Glycidylamine wie beispielsweise Tetraglycidyl-diaminodiphenylmethan.

H) Gleitmittel

Zur Verbesserung der tribologischen Eigenschaften können 0 bis 40, vorzugsweise 10 bis 25 Gew.-% an üblichen Gleitmitteln wie beispielsweise Graphit, Polytetrafluorethylen (PTFE) oder Molybdändisulfid ($MoS_2$) einzeln oder in geeigneter Kombination zugesetzt werden. Dadurch tritt insbesondere bei hohen Temperaturen nur ein geringer Verschleiß auf.

I) Verstärkungsfaser

Zur Verstärkung kommen die üblichen Fasern in Mengen von 0 bis 70 Gew.-% zur Anwendung, wie z.B. auf der Basis von Glas, Aramid oder Kohlenstoff. Dabei sind sowohl Schnitt- als auch Endlosfasern geeignet sowie Mischungen verschiedener Fasertypen.

J) Flammschutzadditiv

Das präpolymere Harzsystem aus A + A' + B hat inhärent gute Brandschutzeigenschaften. Eine Einstufung nach V-0 der Norm UL 94 erfordert jedoch bei Wandstärken von 1 bis 2 mm den Zusatz eines Flammschutzadditivs in Mengen von 5 bis 80 Gew.-%. Hierzu kommen sowohl organische wie anorganische Stoffe in Frage. Neben üblichen halogenhaltigen Verbindungen, wie z.B. dem Glycidylether aus bromiertem Bisphenol A, kommen insbesondere phosphor- und stickstoffhaltige Verbindungen zur Anwendung, wie Phosphate oder Melaminderivate. Als bevorzugtes anorganisches Additiv ist Magnesiumhydroxid zu nennen.

Das Gemisch aus Bismaleinimid(en) und Aminophenolverbindung sowie gegebenenfalls weiteren Zusatzstoffen wird auf Temperaturen zwischen 140 und 200 °C aufgeheizt, wobei die Komponenten aufschmelzen und teilweise zu einem präpolymeren Additionsprodukt reagieren. Die Verweilzeit der Reaktionspartner bei diesen Temperaturen soll verhältnismäßig kurz sein und zwischen 1 und 5 min. betragen. Zu diesem präpolymeren Bismaleinimidharz können die angeführten Zusatzstoffe, wie Polymerisationsinhibitor, Vinyl- oder Allylverbindung, Epoxidharz, Gleitmittel, Verstärkungsfaser oder Flammschutzadditiv, in einem zweiten Mischvorgang zugegeben werden. Es ist aber auch möglich - und kann je nach Anwendungsfall vorteilhaft sein -, die Zusatzstoffe bereits bei der Herstellung des präpolymeren Harzes zuzusetzen und mit abzumischen.

Man kann von einer Vormischung pulver- und granulatförmiger Ausgangsmaterialien ausgehen und diese z.B. in einem Rührgefäß auf Reaktionstemperatur bringen. Bevorzugt wird das Vermischen aber in einem Kneter oder Extruder vorgenommen. Die Umsetzung wird so weit getrieben, daß das Präpolymer noch schmelzbar und löslich ist, was dadurch festgestellt werden kann, daß man die Reaktion durch Messung von Viskosität und Gelierzeit verfolgt. Nach Abkühlung kann das Harz oder die Formmasse granuliert, verschuppt oder pulverisiert werden.

Zur Weiterverarbeitung kann das Harz wieder aufgeschmolzen, in einem Lösungsmittel gelöst oder in Pulverform appliziert werden. Die Herstellung von Gewebe- oder Rovingprepregs erfolgt üblicherweise durch Lösungstränkung und anschließende Verdampfung des Lösungsmittels. Geeignete Lösungsmittel sind beispielsweise Ether oder Ester wie Methylglykolacetat oder Methoxypropylacetat sowie dipolare aprotische Lösungsmittel wie Dimethylformamid oder N-Methylpyrrolidon.

Vermischt man die Harzmischung mit Schnittfasern, so erhält man BMC (Bulk Molding Compound)-Massen, die z.B. durch Spritzgießen verarbeitet und gehärtet werden können.

Die erfindungsgemäßen Harze können aber auch ohne Faserzusatz zu überzügen, Lacken, Verguß- und Einbettmassen verarbeitet werden.

Die Härtung geschieht durch Erhitzen auf Temperaturen zwischen 120 und 300 °C, vorzugsweise auf 180 bis 240 °C, mit einem abgestuften Härtungszyklus mit Verweilzeiten von wenigen Minuten bis zu mehreren Stunden, je nach Anwendungsfall. Die dabei erhaltenen Werkstoffe weisen exzellente mechanische und thermische Eigenschaften auf und können insbesondere in der Elektronik, im Maschinenbau und in der Luft- und Raumfahrt eingesetzt werden.

Beispiel 1

In einem 1-l-Vierhalskolben mit Rührer, Innenthermometer und Stickstoffeinlaß werden bei 165 °C 573 g (1,60 Mol) N,N'-4,4'-Diphenylmethan-bismaleinimid, 194 g (0,69 Mol) N,N'-4-Methyl-1,3-phenylen-bismaleinimid und 1,8 g Toluhydrochinon aufgeschmolzen. Bei 160 °C werden anschließend 133 g (1,22 Mol) 3-Aminophenol zugesetzt. Man rührt bis zur völligen Homogenität der Harzmischung und füllt die Schmelze in eine auf 4 mm Abstand fixierte Metallform aus. Die Harzschmelze wird in der Metallform in einem Wärmeschrank mit folgendem Härtungszyklus ausgehärtet: 2 h bei 160 °C, 2 h bei 200 °C, 10 h bei 260 °C. Die Ergebnisse der mechanischen Prüfungen sind in der nachfolgenden Tabelle zusammengefaßt.

Beispiel 2

Nach dem in Beispiel 1 beschriebenen Verfahren wird ein Bismaleinimidharz aus 578 g (1,61 Mol) N,N-4,4'-Diphenylmethan-bismaleinimid, 185 g (0,69 Mol) N,N'-m-Phenylen-bismaleinimid, 1,8 g Toluhydrochinon und 137 g (1,26 Mol) 3-Aminophenol bei 170 °C hergestellt. Die Härtung des Harzes für die mechanischen Prüfungen erfolgt ebenfalls nach gleichem Härtungszyklus (Tabelle).

Beispiel 3

Nach dem in Beispiel 1 beschriebenen Verfahren wird ein Bismaleinimidharz aus 620 g (1,73 Mol) N,N'-4,4'-Diphenylmethan-bismaleinimid, 464 g (1,73 Mol) N,N'-m-Phenylen-bismaleinimid, 1,8 g Toluhydrochinon und 216 g (1,98 Mol) 3-Aminophenol bei 180 °C hergestellt. Die Härtung des Harzes für die mechanischen Prüfungen erfolgt ebenfalls nach gleichem Härtungszyklus (Tabelle).

Vergleichsbeispiel

Nach dem in Beispiel 1 beschriebenen Verfahren wird ein Bismaleinimidharz aus 425 g (1,19 Mol) N,N'-4,4'-Diphenylmethan-bismaleinimid, 75 g (0,69 Mol) 3-Aminophenol und 1,4 g Toluhydrochinon bei 160 °C hergestellt. Die Härtung des Harzes für die mechanischen Prüfungen erfolgt ebenfalls nach gleichem Härtungszyklus (Tabelle).

Tabelle

| Beispiel | 1 | 2 | 3 | Vergl. |
|---|---|---|---|---|
| dyn. Glasübergangstemperatur [° C] | >320 | >320 | >320 | 320 |
| E-Modul [MPa] | 4450 | 4540 | 5035 | 4300 |
| Reißfestigkeit [MPa] | 73 | 72 | 85 | 72 |
| Reißdehnung [%] | 3,7 | 3,6 | 3,9 | 3,3 |
| Biegefestigkeit [MPa] | 146 | 168 | 179 | 148 |
| Randfaserdehnung [MPa] | 3,5 | 4,2 | 3,8 | 4,5 |
| Schlagzähigkeit [kJ/m²] | 19 | 19 | 21 | 14 |

## Patentansprüche

**1.** Festes, schmelzbares Bismaleinimid-Harz, hergestellt durch Vermischen von

A einem Bismaleinimid der Formel (I)

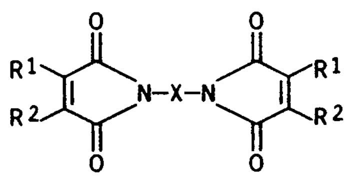

mit X = $C_2$-$C_{10}$-Alkyl,

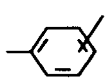 , 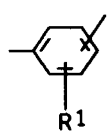 , 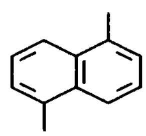

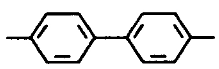 oder 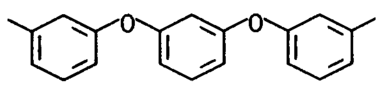 ,

wobei $R^1$, $R^2$ = H, Methyl oder Halogen sind,
gegebenenfalls zusammen mit

A' einem Bismaleinimid der Formel

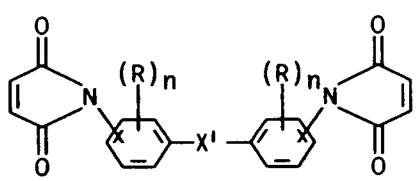

mit
X' = $CH_2$, 0 oder $SO_2$
R = $C_1$-$C_4$-Alkyl
n = 0, 1 oder 2,

B einen Aminophenol der Formel

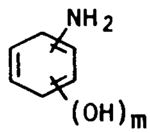

(II)

mit m = 1-3

im Molverhältnis (A+A'):B = 2,8:1 bis 1:1, wobei A+A' und B teilweise zu einem Präpolymeren vorreagieren, sowie gegebenenfalls üblichen Additionskatalysatoren, Polymerisationsinhibitoren, radikalischen Polymerisationsinitiatoren, copolymerisierbaren Vinyl- oder Allylverbindungen, Epoxidharzen, Gleitmitteln, Verstärkungsfasern und Flammschutzadditiven.

**2.** Verwendung des Bismaleinimid-Harzes nach Anspruch 1 zur Herstellung von Formteilen durch Aufbringen auf flächige Fasergebilde und Aushärten.

**3.** Verwendung der Bismaleinimid-Harze nach Anspruch 1 zur Herstellung von BMC-Formteilen durch Vermischen mit Verstärkungsfasern und gegebenenfalls Füllstoffen und Aushärten.

**4.** Verwendung der Bismaleinimid-Harze nach Anspruch 1 zur Herstellung von Vergußmassen.